# EUROPEAN PATENT APPLICATION

(11) **EP 4 841 593 A1**
(43) Date of publication of application: **18.11.2026**
(21) Application number: 26178497.9
(22) Date of filing: 13.05.2026
(51) Int. Cl.: G06V 20/59

(54) **AUTOMOTIVE SYSTEM FOR MONITORING THE DRIVING BEHAVIOUR OF A DRIVER**

(30) Priority: 16.05.2025 IT 202500011108
(71) Applicant: FERRARI S.p.A., 41100 Modena (IT)
(72) Inventor: FRANCO, Alberto, 41100 Modena (IT); BERGAMINI, Stefano, 41100 Modena (IT); CALAMITA, Alessandro, 41100 Modena (IT); DI IORIO, Fabio, 41100 Modena (IT); FERRAZZANO, Antonio, 41100 Modena (IT); GALVANI, Marco, 41100 Modena (IT); GUERRA, Matteo, 41100 Modena (IT); LA MALFA, Salvatore, 41100 Modena (IT); MULTARI, Daniele, 41100 Modena (IT); RUSSO, Giovanni, 41100 Modena (IT); SAENZ GONZALO, Alberto, 41100 Modena (IT)
(74) Representative: Studio Torta S.p.A.

(57) **Abstract**

Automotive system (1) for driving behaviour monitoring comprising a steering column (2), an automotive sensory platform (3), and electronic processing resources (6). Wherein, the steering column (2) comprises at least one movable member (2B) with respect to a vehicle-fixed reference system (S1). Wherein, the automotive sensory platform (3) comprises at least one optical sensor (4) mounted so as to move with the movable member (2B) of the steering column (2), and configured to capture one or more images of an area of the interior of the motor vehicle with respect to a reference system (S2) fixed to the optical sensor (4). And wherein, the automotive sensory platform (3) further comprises one or more position sensors (5) mounted and configured to generate position data indicative of the position of the optical sensor (4) with respect to the vehicle-fixed reference system (S1). The electronic processing resources (6) are configured to receive, from the automotive sensory platform (3), one or more captured images and position data indicative of the position of the optical sensor (4) with respect to the vehicle-fixed reference system (S1). Furthermore, the electronic processing resources (6) are configured to determine and provide an output (block 9) indicative of the driving behaviour of the driver of the motor vehicle based on said captured images and the position data indicative of the position of the optical sensor (4) with respect to the vehicle-fixed reference system (S1).

## Description

### CROSS-REFERENCE TO RELATED APPLICATIONS

This patent application claims priority to Italian patent application No. 102025000011108 filed on May 16, 2025.

### TECHNICAL FIELD OF THE INVENTION

The present invention generally relates to the automotive field. In particular, the present invention relates to an automotive system for monitoring the driving behaviour, in detail the attention, of a driver of a motor vehicle.

### STATE OF THE ART

As is known, multiple automotive systems have been developed for the driving behaviour monitoring of a driver of a motor vehicle. These automotive systems are designed to detect and assess the attention level of the driver of the motor vehicle, in order to prevent any accidents caused by distraction or fatigue. In particular, it is known an automotive system comprising a camera installed on the steering column of the motor vehicle, to monitor the driving attention of the driver through a continuous analysis of the images received from said camera. This camera is positioned in a nominal position with respect to the reference system of the motor vehicle (in detail with nominal coordinates x0, y0, z0) so as to frame a specific area of the motor vehicle interior where the driver should be located during driving in order to capture images representing said area of the interior. The automotive system is configured to determine the driver's gaze direction by analysing the images captured by the camera and, based on this analysis, assess the driver's state of attention or inattention. In detail, the automotive system is configured to determine the driver's state of inattention if it is determined that the driver's gaze direction is directed towards a distraction area. In greater detail, the automotive system is capable of determining whether the driver's gaze direction is directed towards a distraction area based on the nominal coordinates of the camera and the coordinates of the distraction area. It is also known that in some vehicles the steering column of the motor vehicle is movable as it can be adjusted to best ergonomically suit the driver's comfort, who can adjust it manually.

### OBJECT AND SUMMARY OF THE INVENTION

The Applicant has observed that the known solutions are susceptible of improvement. In particular, since the steering column can be adjusted by the driver to better suit the ergonomic comfort, the position of the camera can vary, and this movement causes a discrepancy between the nominal coordinates of the camera's position and the actual one. This may generate an error in the estimation of the driver's gaze direction, which can lead to a reduction in the performance of the automotive system, increasing the number of false positives (reports of inattention when the driver is attentive) and false negatives (failure to report inattention when the driver is distracted). The known system, in fact, is not able to automatically detect that the camera, due to the movement of the steering column, is no longer located at the nominal coordinates.

The object of the present invention is therefore to provide an automotive system for monitoring the driving behaviour of a driver, designed to prevent possible estimation errors due to discrepancies between the nominal coordinates of the camera's position and its actual position. In particular, the object of the present invention is to provide an automotive system capable of determining the driving behaviour (in detail, the attention) of the driver based on the actual position of the camera so as to prevent possible estimation errors.

According to the present invention is provided an automotive system for monitoring the driving behaviour of a driver of a motor vehicle as claimed in the appended claims.

In particular, according to the present invention it is provided an automotive system for the driving behaviour monitoring of a driver of a motor vehicle; wherein, said automotive system comprises a steering column, an automotive sensory platform, and electronic processing resources. Wherein, the steering column comprises at least one movable member with respect to a vehicle-fixed reference system. Wherein, the automotive sensory platform comprises at least one optical sensor mounted so as to move with said movable member of the steering column, and configured to capture one or more images of an area of the motor vehicle interior with respect to a reference system fixed to the optical sensor. And wherein, the automotive sensory platform further comprises one or more position sensors mounted and configured to generate one or more position data indicative of the position of the optical sensor with respect to the vehicle-fixed reference system. The electronic processing resources are configured to receive, from the automotive sensory platform, one or more captured images and position data indicative of the position of the optical sensor with respect to the vehicle-fixed reference system. Furthermore, the electronic processing resources are configured to determine and provide an output indicative of the driving behaviour of the driver of the motor vehicle based on said captured images and on the position data indicative of the position of the optical sensor with respect to the vehicle-fixed reference system.

### BRIEF DESCRIPTION OF THE DRAWINGS

Figure **1** shows a block diagram of an automotive system for monitoring the driving behaviour of a driver of a motor vehicle according to the present invention.
Figure **2** shows a block diagram of the automotive system for monitoring the driving behaviour of a driver of a motor vehicle according to an embodiment of the present invention.
Figure **3A** and Figure **3B** show a steering column and a first position sensor according to a preferred embodiment of the present invention.
Figures **4A, 4B, 4C** show the steering column and a second position sensor according to the preferred embodiment of the present invention.
Figure **5** shows an optical sensor to monitor the driver's attention to driving and a reference system fixed to said optical sensor according to the present invention.
Figure **6** shows the steering column and the optical sensor to monitor the driver's attention to driving according to the present invention.

### DESCRIPTION OF PREFERRED EMBODIMENTS OF THE INVENTION

The present invention will now be described in detail with reference to the accompanying figures to enable a person skilled in the art to make and use it. Various modifications to the described embodiments will be immediately apparent to those skilled in the art and the generic principles described can be applied to other embodiments and applications without departing from the protective scope of the present invention, as defined in the appended claims. Therefore, the present invention is not to be considered limited to the embodiments described and illustrated, but is to be accorded the broadest protective scope consistent with the features described and claimed.

Unless otherwise defined, all technical and scientific terms used herein have the same meaning as commonly understood by one of ordinary skill in the art to which this invention pertains. In case of conflict, the present description, including the definitions provided, shall control. Furthermore, the examples are provided for illustrative purposes only and as such are not to be considered limiting. In particular, the block diagrams included in the accompanying figures and described hereinafter are not to be understood as a representation of structural features, i.e. constructional limitations, but are to be interpreted as a representation of functional features, i.e. properties intrinsic to the devices and defined by the effects obtained, or rather functional limitations, and which can be implemented in different ways, thus so as to protect the functionalities thereof (ability to function).

In order to facilitate the understanding of the embodiments described herein, reference will be made to some specific embodiments and a specific language will be used to describe the same.

The terminology used in the present document is intended to describe only particular embodiments, and is not intended to limit the scope of the present invention.

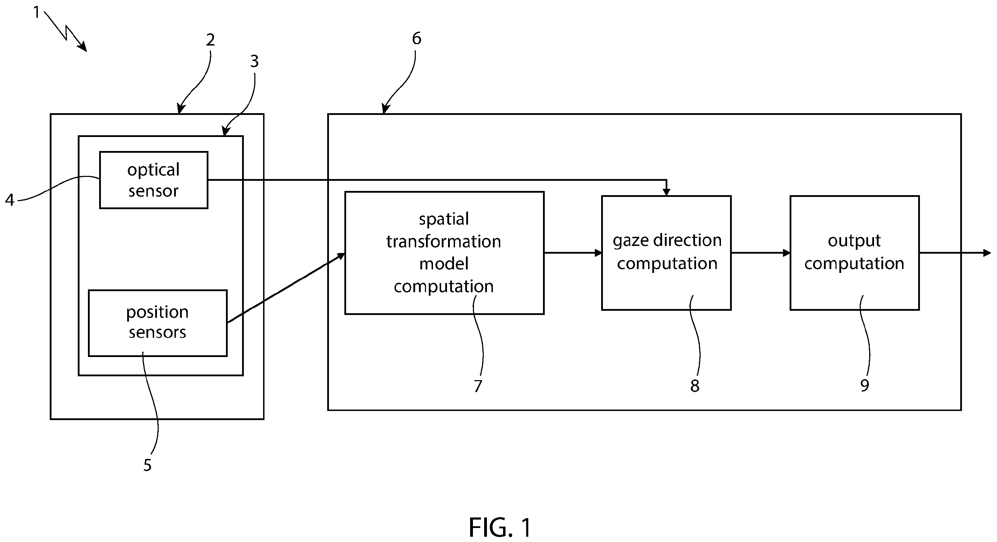

Figure **1** shows a block diagram of an automotive system 1 for the driving behaviour monitoring of a driver of a motor vehicle according to the present invention. Wherein, preferably, the motor vehicle comprises said automotive system 1 for the driving behaviour monitoring. In particular, the automotive system 1 for the driving behaviour monitoring is integrated in the motor vehicle.

The automotive system 1 for the driving behaviour monitoring of the driver of the motor vehicle comprises a steering column 2 (preferably a mechanical steering column), configured to support a steering wheel 10 of a steering system with respect to a chassis of the motor vehicle. Wherein, the steering column 2 extends longitudinally along an axis A thereof, in particular a straight one. In particular, the steering wheel 10 is rotatable with respect to the steering column 2 itself around the axis A. Therefore, the steering column 2 preferably comprises an outer housing for the steering system of the motor vehicle.

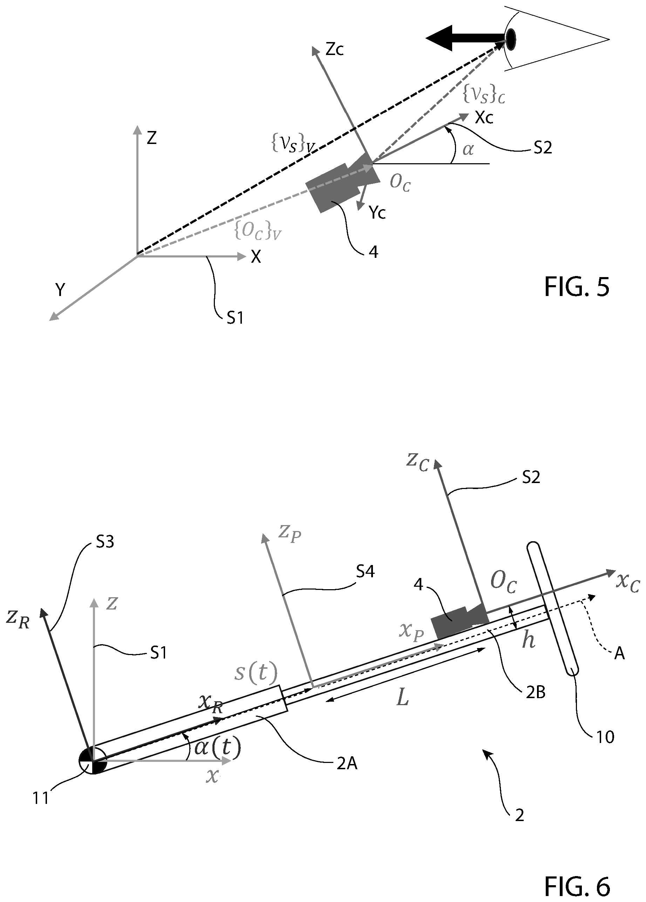

Figure **6** shows the steering column 2 and a reference system S1 fixed to the motor vehicle according to the present invention. The steering column 2 comprises at least one member 2B (or body) that is movable with respect to the reference system S1 fixed to the motor vehicle. Wherein, in detail, the reference system S1 fixed to the motor vehicle is an orthogonal reference system, defined by a vertical axis z, by a lateral axis y (or pitch axis) and by a longitudinal axis x.

Preferably, said steering column 2 comprises a first member 2A configured and arranged to rotate with respect to the reference system S1 fixed to the motor vehicle (in particular around one of its axes, more particularly a pitch axis of the motor vehicle) and a second member 2B configured and arranged to translate with respect to the first member 2A of the steering column 2, in particular along the axis A. In detail, Figure **6** further shows, the first member 2A and the second member 2B of the steering column 2 and shows the respective reference systems. In greater detail, Figure 6 shows a reference system S3 fixed to the first member 2A, a reference system S4 fixed to the second member 2B, the reference system S1 fixed to the motor vehicle and a reference system S2 fixed to an optical sensor 4 mounted (in particular fixed) to the second member 2B of the steering column 2. In particular, the reference system S2 has a longitudinal axis *x_{C}* and a vertical axis *z_{C}*, a lateral axis *y_{C},* and an origin *O_{c}.* In particular, the reference system S3 has a longitudinal axis *x_{R}* and a vertical axis *z_{R}*. In particular, the reference system S4 has a longitudinal axis *x_{P}* and a vertical axis *z_{P}*.

In detail, the second member 2B is configured to move with respect to the first member 2A of the steering column 2; in more detail, it is configured to move telescopically with respect to the first member 2A of the steering column 2 along the axis A. In greater detail, the first and the second member 2B are coupled to each other in such a way as to allow the second member 2B to perform a sliding movement, in particular along the axis A, with respect to the first member 2A of the steering column 2. In greater detail, in order to allow said sliding movement, the first member 2A is coupled to the second member 2B by means of a sliding joint (i.e. a prismatic joint). In greater detail, the second member 2B is configured to move along the longitudinal axis *x_{R}* of the reference system S3 fixed to the first member 2A. Preferably, the longitudinal axis *x_{R}* of the reference system S3 coincides with the axis A. Wherein, in more detail, the reference system S3 fixed to the first member 2A has axes parallel to those of the reference system S4 fixed to the second member 2B. Furthermore, in detail, the first member 2A is coupled (or mounted) to the chassis of the motor vehicle by means of a joint 11 configured to allow the first member 2A to move, preferably to rotate, with respect to the reference system S1 fixed to the motor vehicle. In greater detail, said joint 11 is a hinge joint or a revolute joint and the first member 2A is consequently configured to rotate (with respect to the chassis) along an axis of the reference system S1 fixed to the motor vehicle, in particular the pitch axis. In detail, the steering column 2 thus has two degrees of freedom: the pitch rotation *α* of the optical sensor 4 with respect to the chassis of the motor vehicle and the sliding movement that defines the extension of the steering column 2.

Furthermore, the automotive system 1 for driving behaviour monitoring comprises electronic processing resources 6 configured to perform various operations for monitoring the driving behaviour (and, in particular, for monitoring the attention) of a driver of the motor vehicle. Wherein, in detail, said operations for driving behaviour monitoring comprise one or more calibration operations.

In particular, the electronic processing resources 6 store and are configured to execute a software for driving behaviour monitoring designed to cause, when executed, said electronic processing resources 6 to become configured (in detail programmed) to perform the various operations for driving behaviour monitoring.

With regard to the driving behaviour (or attention) monitoring, it should be emphasized that what matters are the operations that must be implemented to achieve said functionality and not the hardware and software architectures with which said operations are implemented, to the point that these could be implemented by means of a concentrated architecture, i.e. by a single automotive electronic control unit (for example an ECU; Electronic Control Unit), or by means of a cooperative distributed architecture, for example distributed among several electronic devices (for example, even external to the motor vehicle) communicating and cooperating with each other according to a proprietary logical architecture that the manufacturer of the automotive system 1 for driving behaviour monitoring will decide to adopt.

The automotive system 1 for driving behaviour monitoring further comprises an automotive sensory platform 3. Wherein, said automotive sensory platform 3 comprises at least the optical sensor 4, in detail a camera, mounted so as to move with (or together with) the movable member 2B of the steering column 2, and configured to capture one or more images of an area, in detail to be monitored, of the motor vehicle interior with respect to the reference system S2 fixed to the optical sensor 4. In particular, the optical sensor 4 is mounted so as to move based on a movement of the second member 2B. In detail, the optical sensor 4 is mounted to the second member 2B to move coordinately (in particular integrally or so as to be integral) with it; in greater detail, it is fixed on the second member 2B of the steering column 2.

It should be noted that, hereinafter, the term camera reference system S2 will refer to the reference system S2 fixed to the optical sensor 4, without any loss of generality.

Conveniently, said reference system S2 of the camera has axes parallel to, and/or optionally corresponds to, the reference system S4 fixed to the second member 2B of the steering column 2. Alternatively, optionally, said reference system S2 of the camera is rotated with respect to the reference system S4 fixed to the second member 2B.

In more detail, the position of the optical sensor 4, being mounted so as to move integrally with the movable member 2B of the steering column 2, can vary as it varies based on the movements of said movable member 2B of the steering column 2. The optical sensor 4 is designed to provide as an output an image of the area to be monitored with respect to the camera reference system S2 and conveniently also data indicative of the time instant at which said image of the area to be monitored was captured by the optical sensor 4. In detail, this optical sensor 4 is designed to capture and transmit images of the area to be monitored continuously or at predefined time intervals (for example, during the development phase). In detail, said optical sensor 4 is installed on the steering column 2 so as to frame the area to be monitored of the motor vehicle interior, in which, in particular, at least the driver's face should be found or located while driving the motor vehicle. For example, said optical sensor 4 can be an RGB (Red Green Blue) camera, or an infrared camera.

In particular, the optical sensor 4 is positioned in a nominal position with respect to the reference system S1 fixed to the motor vehicle (in detail with nominal coordinates x0, y0, z0), and said nominal position is preferably stored in electronic storage resources, internal or external to the motor vehicle.

Furthermore, the automotive sensory platform 3 comprises one or more position sensors 5 mounted, or installed, and configured to generate (or determine and provide as an output) one or more position data indicative of the position of the optical sensor 4 with respect to the reference system S1 fixed to the motor vehicle. Conveniently, said position data are also indicative of the orientation of the optical sensor 4 with respect to the reference system S1 fixed to the motor vehicle. In particular, said position data correspond to the output of the position sensors 5. In detail, said position data are position signals, or analogue data, indicative of or a function of said position of the optical sensor 4 with respect to the reference system S1 fixed to the motor vehicle. Alternatively, optionally, said position data are position quantities, or digital data, indicative of or a function of said position of the optical sensor 4 with respect to the reference system S1 fixed to the motor vehicle.

Wherein, in particular, the position data are indicative of a position of the optical sensor 4 along a vertical axis z (or yaw axis) of the reference system S1 and of a position of the optical sensor 4 along a transverse axis x (in detail longitudinal axis) of the reference system S1; said transverse axis being oriented transversely to the vertical axis z and more in detail directed according to a normal direction of travel of the motor vehicle.

In general, in this description, the position of the optical sensor 4 can be understood as a pose comprising at least the positions of the optical sensor 4 along the x and z axes and preferably also the steering column orientation alpha, as a function of the measurement from the optical sensor 4 given by an angle *β* of the optical sensor 4.

In detail, the position data comprise data indicative of the position of the optical sensor 4 along the vertical axis z of the reference system S1 fixed to the motor vehicle and data indicative of the position of the optical sensor 4 along the longitudinal axis x of the reference system S1 fixed to the motor vehicle.

According to one aspect of the present invention, said position data comprise data that allow the position of the optical sensor 4 to be calculated along the vertical axis z and along the longitudinal axis x of the reference system S1 fixed to the motor vehicle. In detail, said position data comprise data indicative of the orientation of the optical sensor 4 with respect to the reference system S1 fixed to the motor vehicle; wherein, said data comprises a quantity indicative of the pitch angle *α* of the optical sensor 4.

Preferably, the position data also comprise data indicative of a displacement of the movable member 2B of the steering column 2 along the axis A of the steering column 2. In detail, said data is indicative of the displacement, in particular of translation, of the second member 2B with respect to the first member 2A. In more detail, said data comprises or coincides with a quantity indicative of a distance or length of displacement of the second member 2B with respect to the first member 2A along the axis A of the steering column. Preferably, said quantity represents the distance between the origin of the reference system S3 and the origin of the reference system S4.

Optionally, said quantity represents the distance between the origin of the reference system S3 and the position of the optical sensor 4. Alternatively, said quantity optionally represents the length or extension of the steering column 2, understood as the fixed length of the first member 2A added to the length of a visible portion of the second member 2B, considering that a portion of it is inside the first member 2A and therefore not visible.

According to an alternative aspect of the present invention, the position data comprise data indicative of the position of the optical sensor 4 along the vertical axis z of the reference system S1 fixed to the motor vehicle and data indicative of the position of the optical sensor 4 along the longitudinal axis x of the reference system S1 fixed to the motor vehicle. In detail, said position data comprise, optionally correspond to, spatial coordinates of the position of the optical sensor 4, in detail along the vertical axis z and along the longitudinal axis x with respect to the reference system S1 fixed to the motor vehicle. Conveniently, the position data further comprise the data indicative of the orientation of the optical sensor 4 with respect to the reference system S1 fixed to the motor vehicle.

In detail, in order to generate the position data, said position sensors 5 are mounted in such a way as to detect the position of the optical sensor 4 with respect to the reference system S1 fixed to the motor vehicle. Conveniently, in order to generate the position data, at least one of said position sensors 5 is mounted in such a way as to determine the data indicative of the orientation of the optical sensor 4 with respect to the reference system S1 fixed to the motor vehicle. Furthermore, in detail, said position sensors 5 are configured to generate position data at each time instant. According to a preferred embodiment of the present invention, the position sensors 5 comprise a first sensor 5A and a second sensor 5B designed to allow the generation of the position data.

Conveniently, the position sensors 5 also comprise a sensor (optionally the sensor 5A) designed to generate the position data indicative of the orientation of the optical sensor 4 with respect to the reference system S1 fixed to the motor vehicle. In greater detail, the electronic processing resources 6 are configured to compute the orientation *α* of the steering column 2, and therefore of the optical sensor, based on a quantity indicative of the displacement measured by the sensor 5B.

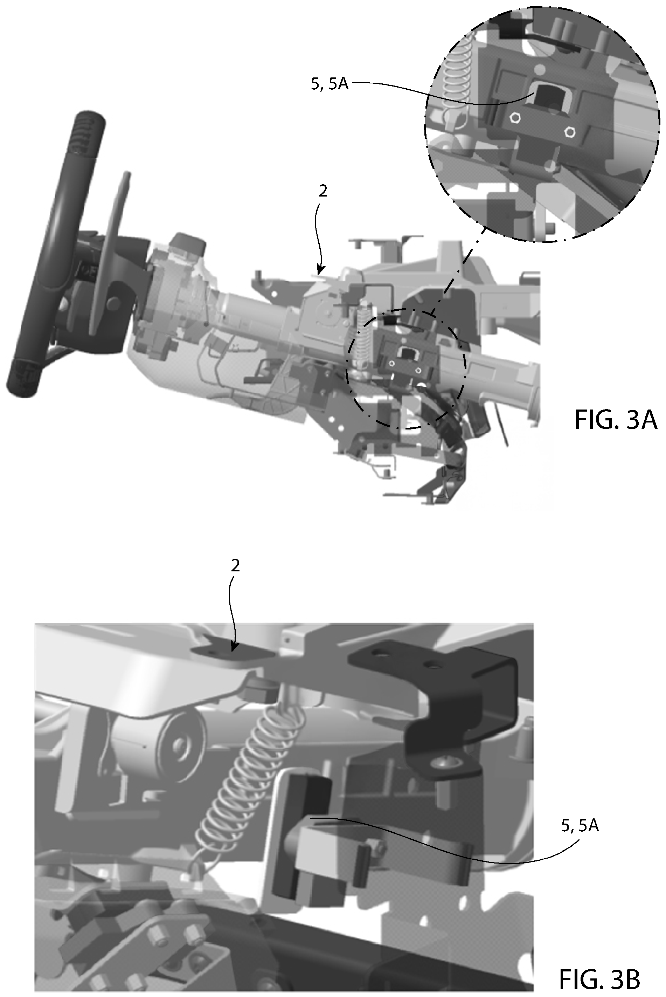

Figure 3A and Figure 3B show the steering column 2 and a first position sensor 5A according to the preferred embodiment of the present invention. In particular, Figure 3A shows an example of the steering column 2 in its entirety and the first position sensor 5A installed thereon. Figure 3B illustrates the first position sensor 5A, coupled or associated with the steering column 2, in a view that highlights its details.

In detail, the first sensor 5A is a Hall effect position sensor 5A configured and mounted to generate the data indicative of the orientation of the optical sensor 4 with respect to the reference system S1 fixed to the motor vehicle. Wherein, preferably, said Hall effect position sensor 5A is a non-contact linear Hall effect position sensor 5A. In particular, the Hall effect position sensor 5A is designed to provide as an output an electrical signal (i.e. the position data) such as to allow the electronic processing resources 6 to determine, on the basis of said electrical signal, the corresponding pitch angle quantity*α*. Wherein, optionally, the electrical signal is at least positively correlated (increasing with), in particular is proportional, to the position of the optical sensor 4 along the vertical axis z.

In detail, the steering column 2 comprises a permanent magnetic element, or magnet, carried by (in detail fixed on) the steering column 2 or more precisely by the member 2A. In particular, the magnetic element is arranged in a fixed position on the first member 2A at a point distant from the origin of the reference system S3 by a radius r along the axis A of the steering column 2. In particular, the permanent magnetic element is fixed on a bracket, in turn fixed on the first member 2A of the steering column 2, more particularly by means of one or more threaded holes present on said bracket. For example, both the bracket and the permanent magnetic element are fixed respectively to the member 2A and to the bracket using screws that are screwed into the threaded holes. This configuration allows the magnet to be positioned precisely and stably, ensuring that it remains in position during a movement of the steering column 2.

The Hall effect position sensor 5A is preferably fixed on a cross-car beam of the motor vehicle, in turn fixed to the chassis (or on another element fixed to the chassis of the motor vehicle), in particular so as to detect the magnetic field generated by the permanent magnetic element when the latter slides in front of the Hall effect position sensor; in detail, the sensor 5A is aligned facing the first member 2A of the steering column 2 and more particularly the permanent magnetic element when the first member 2A is in a nominal position. In particular, the Hall effect position sensor 5A is fixed on a bracket, in turn welded or fixed on the cross-car beam. In detail, this configuration allows the Hall effect position sensor to remain facing the permanent magnetic element which can move together (in particular integrally) with the first member 2A of the steering column 2, thus ensuring a precise measurement of the arc of a circumference traced by the magnetic element around the origin of the system S3 (in detail around the y-axis), whereby the arc of the circumference subtends the pitch angle *α* (or of rotation of the first member 2A with respect to the reference system S1 fixed to the motor vehicle). Furthermore, the use of this Hall effect position sensor 5A allows the displacement to be measured without mechanically interfering with the steering column 2. In detail, the Hall effect position sensor 5A is also configured to determine the data indicative of the position of the optical sensor 4 along the vertical axis z and/or along the longitudinal axis x based on said pitch angle *α* or vice versa.

In more detail, the Hall effect position sensor 5A can be configured to measure a circumferential displacement (i.e. the arc of a circumference) traced by the first member 2A with respect to the reference system S1 fixed to the motor vehicle and to compute the pitch angle *α* of the optical sensor 4 based on said measured circumferential displacement. In greater detail, the Hall effect position sensor 5A is configured to measure a circumferential displacement (i.e. the arc of a circumference) tracedby the permanent magnetic element around the origin of the reference system S3 (in particular around the y-axis). In particular, the measurement takes place by means of magnetic cooperation between the permanent magnetic element and the Hall effect position sensor 5A.

More in detail, the pitch angle *α* of the optical sensor 4 is computed based on the measured circumferential displacement and based on the radius r, defined by the distance between the point of the member 2A where the permanent magnetic element is fixed and the origin of the reference system S3. In particular, the pitch angle *α* is computed by means of the formula: $L = \frac{α}{360 °} ∗ 2 πr$

Wherein, *α* is the pitch angle (in particular it is the angle expressed in degrees), L is the measured circumferential displacement, and r is the defined radius.

At this point, the sensor 5A can be configured to compute the data indicative of the position of the optical sensor 4 along the z-axis and/or along the x-axis based on the pitch angle *α*, in particular by projecting the radius of the circumference onto the z-axis (sine of the pitch angle *α* times the radius of the circumference).

Alternatively, the sensor 5A can be configured to compute the position data along the z-axis, and then compute the orientation data (in detail the pitch angle *α*), for example according to trigonometric calculations.

Furthermore, it may be noted that the Hall effect position sensor 5A is immune to dust and condensation, unlike other sensors that can be used to determine said position along the vertical axis z.

Alternatively, the first sensor 5A may optionally be a sensor different from the Hall effect position sensor, if configured to determine or detect the pitch angle *α* or the position of the optical sensor 4 along the vertical axis z and/or along the longitudinal axis x, although the latter may be less effective than the Hall effect position sensor. For example, alternatively, said first sensor 5A is a rotary potentiometer designed to measure the pitch angle *α* of the optical sensor 4.

Furthermore, preferably, the second sensor 5B is a rotation (or rotary) sensor 5B, in particular an inductive rotary sensor 5B. In detail, the rotary sensor 5B is designed and mounted to generate the data indicative of the displacement of the member 2B along the axis A of the steering column, in detail with respect to the member 2A of the steering column. In greater detail, the rotary sensor 5B is designed to output an electrical signal (i.e. position data) such as to allow the electronic processing resources 6 to determine, based on said electrical signal, the data indicative of the displacement of the member 2B of the steering column; optionally, also the position quantity along the longitudinal axis x and/or along the vertical axis z.

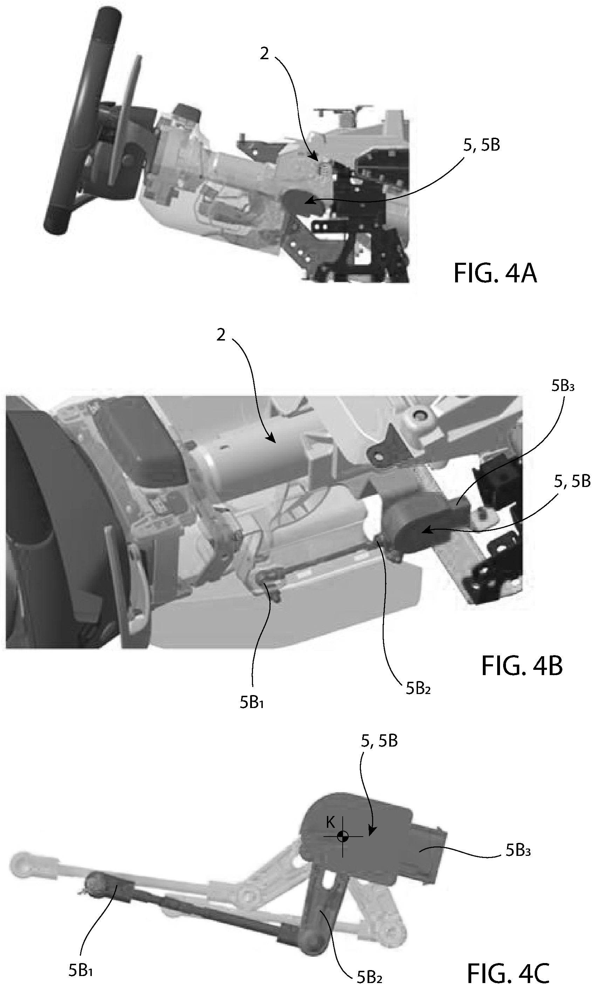

Figures 4A, 4B, 4C show the steering column 2 and the second position sensor according to the preferred embodiment of the present invention. In particular, Figure 4A shows the steering column 2 in its entirety and the second position sensor 5B installed thereon. Figure 4B illustrates the second position sensor 5B, coupled to the steering column 2, in a view that highlights its details. Furthermore, Figure 4C shows by way of example the second position sensor 5B as isolated from the steering column 2 in which it is installed.

In detail, said rotary sensor 5B comprises a rod or connecting rod 5B1, a crank 5B2 and a housing 5B3.

The housing 5B3 is fixed to the first member 2A. The crank 5B2 comprises a first end rotatably supported by the housing 5B3 about an axis k, for example parallel to the y-axis. Furthermore, at least a first end of the rod 5B1 is fixed or hinged to the second member 2B and a second end, opposite the first, of the rod 5B1 is fixed or hinged to a second end of the crank 5B2 (opposite the first end of the crank 5B2), so as to allow the rod 5B1 to move along the axis A, driven by the second member 2B translating along the axis A.

Preferably, the rod 5B1 is installed and dimensioned so as not to interfere with the collapsing stroke of the steering column 2. In detail, the end of said rod 5B1 is fixed to the second member 2B at the origin of the reference system S4. Furthermore, the rotary sensor 5B comprises a transducer configured to measure or detect the rotation of the crank 5B2, in particular an angle of rotation, around the axis k. In detail, the measured angle of rotation corresponds to the translation or displacement of the rod 5B1. Wherein, the detected angle is indicative of the displacement of the rod 5B1, according to known relations not described in detail, based on the lengths of the rod 5B1 and of the crank 5B2. In more detail, the data indicative of the displacement of the second member 2B along the axis A represents the displacement of the rod 5B1 along the axis A of the steering column 2 added to a constant; wherein, the value of the constant depends on the position of the housing 5B3 of the rotary sensor 5B.

In particular, the transducer 5B3 comprises or consists of an inductive sensor (or sensing) configured such that its inductance varies as a function of the rotation of the crank 5B2.

Furthermore, the transducer comprises a detection circuit configured to convert the variation of the inductance into an electrical signal (or data) indicative of the measured rotation, i.e. of the displacement of the second member 2B along the axis A of the steering column, and to output said electrical signal.

In order not to influence the collapsing stroke, said rod 5B1 is conveniently a flexible rod 5B1. In detail, the rotary sensor 5B is a spring-return Hall effect sensor with a flexible element as the rod 5B1, so as not to interfere with the collapsing stroke of the steering column 2. In detail, during the telescopic movement of the second member 2B with respect to the first 2A, the rod 5B1 undergoes an elastic deformation which allows it to flex back and forth. This flexion is caused by the variation of the relative position between the two members 2A, 2B along the longitudinal axis. In detail, the rotary sensor 5B allows the required objective to be achieved with minimal impact on the design, in terms of parts to be added or modified. Furthermore, the use of said rotary sensor 5B represents an advantageous solution in terms of time and costs, as it does not affect the necessary homologation requirements.

Optionally, alternatively, the second sensor 5B may be a non-contact sensor. However, a rotary sensor 5B, compared to a non-contact sensor, is configured to ensure the reading under all stroke conditions. In detail, the installation of a non-contact sensor would not guarantee the required airgap between the magnet and the sensor due to component and assembly tolerances.

In detail, a possible alternative to the proposed installation could be a direct integration of the sensors on the steering column 2, with magnets respectively fixed to the members 2A, 2B of the steering column 2 and respective sensors fixed on the cross-car beam.

The electronic processing resources 6 are configured to receive, from the automotive sensory platform 3, one or more captured images and one or more position data, in detail, generated at the current time instant, indicative of the position (and preferably of the orientation) of the optical sensor 4 with respect to the reference system S1 fixed to the motor vehicle. In detail, the electronic processing resources 6 are configured to receive the images, in detail of the area to be monitored, from the optical sensor 4 of the automotive sensory platform 3. Furthermore, in detail, the electronic processing resources 6 are configured to receive the position data generated at the current time instant and indicative of the position and preferably orientation of the optical sensor 4 with respect to the reference system S1 fixed to the motor vehicle, directly or indirectly, from the position sensors 5. In greater detail, the electronic processing resources 6 are configured to receive the data indicative of the orientation of the optical sensor 4 with respect to the reference system S1 fixed to the motor vehicle from the Hall effect position sensor 5A; and to receive the data indicative of the displacement of the movable member 2B of the steering column from the rotary sensor 5B.

Optionally, the electronic processing resources 6 are further configured to store, in electronic storage resources (internal or external to the motor vehicle), the determined (in detail, generated) position data such that they are associated with the time instant at which the position sensors 5 generated said position data.

Furthermore, preferably, the electronic processing resources 6 are configured to compute processed position data based on the received position data; wherein, the processed position data comprise a position value of the optical sensor 4 along the vertical axis z of the reference system S1 fixed to the motor vehicle and a position value of the optical sensor 4 along the longitudinal axis x of the reference system S1 fixed to the motor vehicle.

In detail, the electronic processing resources 6 are configured to compute the position value (for example spatial coordinates) of the optical sensor 4 along the vertical axis z of the reference system S1 fixed to the motor vehicle and the position value (for example spatial coordinates) of the optical sensor 4 along the longitudinal axis x of the reference system S1 fixed to the motor vehicle based on the data indicative of the displacement of the member 2B of the steering column 2 and based on the pitch angle α of the optical sensor 4. In more detail, from the rotation data of the sensor it is possible to compute the pitch angle α of the steering column 2, and from the rotation of the steering column 2 itself and from the data indicative of the displacement of the member 2B it is also possible to compute the longitudinal position x and vertical position z of the optical sensor 4. By way of non-limiting example, the electronic processing resources 6 are configured to compute the position of the optical sensor 4 based on the following formula: ${\left\{{O}_{C}\left(t\right)\right\}}_{V} = {\left\{\begin{matrix}{x}_{{O}_{C}} \left(t\right) \\ {z}_{{O}_{C}} \left(t\right)\end{matrix}\right\}}_{V} = \left[\begin{matrix}cos α \left(t\right) & - sin α \left(t\right) \\ sin α \left(t\right) & cos α \left(t\right)\end{matrix}\right] \left\{\begin{matrix}L + s \left(t\right) \\ h\end{matrix}\right\}$

Wherein, {*O_{C}*(*t*)}*_{V}* is the position of the optical sensor 4 according to the reference system S1 of the motor vehicle, L and h are the nominal coordinates of the camera (i.e. the position of the optical sensor 4) with respect to an origin of the reference system S4, α(t) is the pitch angle *α* determined, and s(t) is the translational displacement of the member 2B (i.e., the data indicative of the displacement of the member 2B along the axis A). In particular, in the case in which the pitch angle *α* determined is equal to zero (hence in the case of α(t)=0), the relation would simply become: ${\left\{\begin{matrix}{x}_{{O}_{C}} \\ {z}_{{O}_{C}}\end{matrix}\right\}}_{V} = \left\{\begin{matrix}L + s \left(t\right) \\ h\end{matrix}\right\}$

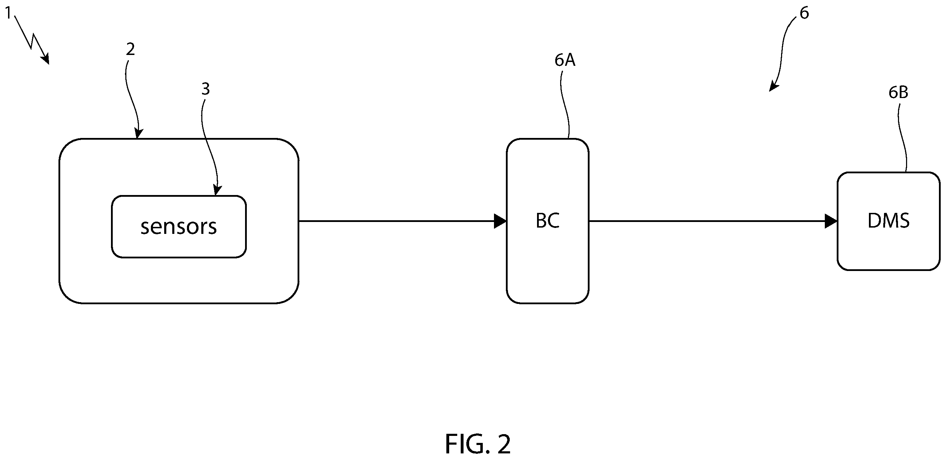

Figure 2 shows a block diagram of the automotive system 1 for monitoring the driving behaviour of a driver of a motor vehicle according to an embodiment of the present invention.

According to this embodiment of the present invention, the electronic processing resources 6 comprise a first Electronic Control Unit (ECU), in particular a BC ECU 6A (Body Computer), and a further second Electronic Control Unit, in particular a DMS ECU 6B (Driver Monitoring System), distinct and/or separate from the first Electronic Control Unit (the NB ECU 6A). In particular, the NB ECU 6A is designed to receive the position data (in particular electrical signals) from the position sensors 5. In particular, the NB ECU 6A is configured to have inputs compatible with the outputs of the position sensors 5. Optionally, said BC ECU 6A is an NBC (Body Computer Node) Electronic Control Unit. In particular, the range of the receivable electrical signals, which ranges from 0 to 60 mm, conforms to the maximum movement of the steering column 2 both along the vertical axis z and along the longitudinal axis x. Furthermore, the data resolution required by the DMS ECU 6B is preferably 1 mm. In detail, the NB ECU 6A is configured to convert the received or processed position data into corresponding position data, indicative of the position of the optical sensor 4 with respect to the reference system S1 fixed to the motor vehicle, comprising quantities conveniently expressed in millimetres; and to output said position data. In greater detail, the NB ECU 6A is configured to convert the received or processed position data into corresponding signals (or position data) indicative of the position quantities, of the position of the optical sensor 4 with respect to the reference system S1 fixed to the motor vehicle, for example expressed in millimetres. Furthermore, said NB ECU 6A is configured to transmit said converted signals over a Controller Area Network (CAN) to the DMS ECU 6B, thereby allowing the latter to perform one or more operations to monitor the driving behaviour of the driver of the motor vehicle. In greater detail, the position data transmitted by the NB ECU 6A comprise a SteeringColumnX signal which represents the position of the optical sensor 4 along the vertical axis z, and a SteeringColumnZ signal which represents the position of the optical sensor 4 along the longitudinal axis x. In particular, the DMS ECU 6B is configured to determine the corresponding position data based on the signals received from the NB ECU 6A, in particular based on the SteeringColumnX and SteeringColumnZ signals.

Furthermore, the electronic processing resources 6 are configured to determine and provide an output (block 9) indicative of the driving behaviour of the driver of the motor vehicle based on said captured images and based on the position data indicative of the position of the optical sensor 4 with respect to the reference system S1 fixed to the motor vehicle. In particular, said output is an alert or a signal indicative of the driving behaviour of the driver of the motor vehicle. In particular, the electronic processing resources 6 are designed to generate the output (block 9) indicative of a request to the driver to pay attention to driving if a condition of driver inattention is determined to be satisfied based on the captured and received images and based on the received position data. For example, the electronic processing resources 6 are designed to generate (block 9) an audible alert to draw the attention of the driver of the motor vehicle. According to another example, the electronic processing resources 6 are designed to cause a textual content indicative of the request to the driver to pay attention to driving to be displayed (block 9) on a screen of the motor vehicle.

Preferably, in order to determine and provide said output (block 9), the electronic processing resources 6 are configured to compute (block 7) a spatial transformation model, in particular a roto-translation matrix, based on the position data received as input. In detail, the electronic processing resources 6 are configured to compute (block 7) the spatial transformation model based on the orientation data.

In detail, the spatial transformation model is computed to be configured to align the reference system S2 of the camera with the reference system S1 fixed to the motor vehicle based on the position data received as input. In more detail, the electronic processing resources 6 are configured to compute (block 7) the spatial transformation model based on the position value of the optical sensor 4 along the vertical axis z and the position value of the optical sensor 4 along the longitudinal axis x of the reference system S1 fixed to the motor vehicle. In greater detail, the spatial transformation model is computed to rotate or more precisely roto-translate the reference system S2 of the camera with respect to the reference system S1 fixed to the motor vehicle.

In greater detail, the spatial transformation model is configured to rotate the reference system S2 to cause it to become aligned with the reference system S1, and is further configured to translate the reference system S2 to cause it to coincide with the reference system S1. According to one aspect of the present invention, the spatial transformation model comprises the rotation matrix to rotate the reference system S2 and comprises a translation module (or algorithm) to translate said reference system S2 to make it coincide with the reference system S1. According to a different aspect of the present invention, the spatial transformation model comprises a roto-translation matrix configured to rotate and translate the reference system S2 with respect to the reference system S1.

Alternatively or in addition, the spatial transformation model is configured to receive a quantity with respect to the reference system S2 of the camera, and to compute and output a corresponding quantity with respect to the reference system S1 fixed to the motor vehicle based on the quantity received as input. In more detail, the spatial transformation model being configured to transform a quantity with respect to the reference system S2 of the camera into a corresponding quantity with respect to the reference system S1 fixed to the motor vehicle.

Furthermore, said electronic resources are configured to determine and provide an output (block 9) indicative of the driving behaviour of the driver of the motor vehicle based on said captured images and the spatial transformation model. According to one aspect of the present invention, in order to compute (block 7) the spatial transformation model, the electronic processing resources 6 are configured to compute a displacement quantity (for example, in vector form, composed of multiple displacement quantities, or more generally to compute a plurality of displacement quantities), indicative of the displacement of the optical sensor 4 with respect to the reference system S1. More particularly, the displacement quantity is indicative of the translational displacement of the optical sensor 4, for example along the axis A (in particular coinciding with the data indicative of the displacement of the member 2B) and/or of the rotation of the optical sensor 4 with respect to the reference system S1 (precisely the y-axis). The displacement quantity is conveniently computed based on the position data at the current time instant and based on one or more position data generated at one or more time instants prior to the current time instant. Furthermore, according to said aspect of the present invention, the electronic processing resources 6 are configured to compute a displacement quantity along the longitudinal axis x, indicative of the displacement of the optical sensor 4 along the longitudinal axis x, based on the position of the optical sensor 4 along the longitudinal axis x determined at the current time instant and based on one or more position values along the longitudinal axis x computed at one or more time instants prior to the current time instant.

Furthermore, according to said aspect of the present invention, the electronic processing resources 6 are configured to compute a displacement quantity along the longitudinal axis x, indicative of the displacement of the optical sensor 4 along the longitudinal axis x, based on the position of the optical sensor 4 along the longitudinal axis x determined at the current time instant and based on one or more position values along the longitudinal axis x computed at one or more time instants prior to the current time instant.

Furthermore, according to said aspect of the present invention, the electronic processing resources 6 are optionally configured to compute a rotation quantity around the y-axis, indicative of the rotation of the optical sensor 4 around the y-axis, based on data indicative of the orientation of the optical sensor 4 generated at the current time instant and based on one or more data indicative of the orientation of the optical sensor 4 generated at one or more time instants prior to the current time instant.

Furthermore, the electronic processing resources 6 are configured to compute (block 7) the spatial transformation model based on the displacement quantity along the vertical axis z, the displacement quantity along the longitudinal axis x, and optionally the rotation quantity around the y-axis.

Conveniently, the electronic processing resources 6 are configured to compute (block 7) said spatial transformation model based on one or more quantities indicative of the kinematics of the steering column 2. For example, the electronic processing resources 6 are further configured to receive as input said quantities indicative of the kinematics of the steering column 2 from the automotive sensory platform 3.

Preferably, in order to compute the spatial transformation model, the electronic processing resources 6 are further configured to determine (or compute) a pitch angle *α* of the optical sensor 4; in detail based on the position data received. In greater detail, the electronic processing resources 6 are further configured to determine, in detail compute, the pitch angle *α* based on the quantity measured by the rotary sensor.

In detail, the electronic processing resources 6 are designed to compute the value of the angle alpha based on the quantity indicative of the circumferential displacement measured by sensor 5A.

Using the angle value *α*, and the data indicative of the displacement of the second member 2B (with respect to the first member 2A) measured by the rotary sensor 5B, the electronic processing resources 6 are conveniently configured to compute the displacement values along the vertical axis z and the displacement quantity along the longitudinal axis x. For example, this can occur if the electronic processing resources 6 receive a displacement quantity indicative of the translational displacement of the optical sensor 4 along the axis A, in particular by means of trigonometric computations based on the distance, obtainable directly from the translational displacement of the optical sensor 4 along the axis A, between the optical sensor 4 and the origin of the reference system S1. Alternatively, conveniently, the electronic processing resources 6 are configured to determine the pitch angle *α* of the optical sensor 4 based on the position data received as input as said quantity is included in the position data (in detail in the orientation data computed on the basis of the rotational measurement sensor).

Preferably, the electronic processing resources 6 are configured to compute (block 7) the spatial transformation model based on the determined pitch angle *α* of the optical sensor 4. In particular, assuming that the optical sensor 4 is installed frontally with respect to the driver (in detail with zero roll and yaw angles), the electronic processing resources 6 are configured to compute (block 7) at least the rotation matrix of the spatial transformation model according to the following formula: ${\left[R\right]}_{V}^{C} = \left[\begin{matrix}cos α & - sin α \\ sin α & cos α\end{matrix}\right]$

Wherein, ${\left[R\right]}_{V}^{C}$ is the rotation matrix of the spatial transformation model to align the reference system S2 with the reference system S1 and wherein *α* is the determined pitch angle.

According to a further aspect of the present invention, the electronic processing resources 6 are further configured to determine whether a condition of absence of motion of the steering column 2 is or is not satisfied based on the position data generated at the current time instant and based on position data generated at a time instant prior to the current time instant (conveniently at the closest preceding time instant).

In detail, the electronic processing resources 6 are further configured to determine that a condition of absence of motion of the steering column 2 is satisfied if a number (for example defined by means of experiments or tests) of position data generated at different time instants are identical. Wherein, optionally, two position data are identical when the position quantities comprised in, or derivable from, said position data are identical to each other. In greater detail, two positions are also identical when the difference between the latter is less than a predefined tolerance threshold. In detail, the Electronic Control Unit NB 6A is able to determine whether the condition of absence of motion of the steering column 2 is or is not satisfied, in particular by monitoring the variation of the position of the optical sensor 4 along the x and z axes of the reference system S1 fixed to the motor vehicle.

In detail, the Electronic Control Unit NB 6A is designed to transmit to the Electronic Control Unit DMS 6B a signal, for example named SteeringMovement, indicative of the state of motion of the steering column 2 (for example with Active or Non Active status). In greater detail, the Electronic Control Unit NB 6A is designed to transmit to the Electronic Control Unit DMS 6B a signal indicative of the absence of motion (with Non Active status) when it determines that the condition of absence of motion of the steering column 2 is satisfied; and conveniently a signal indicative of the presence of motion (with Active status) when it determines that the condition of absence of motion of the steering column 2 is not satisfied.

According to this aspect of the present invention, the electronic processing resources 6 are configured to compute (block 7) the spatial transformation model (in order to align the reference system S2 of the camera with the reference system S1 fixed to the motor vehicle), if (in detail only if) the condition of absence of motion of the steering column 2 is determined to be satisfied. In detail, this approach ensures that the steering column 2 is actually stationary and/or stable before carrying out the calibration of the system, i.e., computing (block 7) the spatial transformation model. In detail, the Electronic Control Unit DMS 6B is configured to compute (block 7) the spatial transformation model to align the reference system S2 of the camera with the reference system S1 fixed to the motor vehicle, if (in detail only if) the signal of the state of motion of the steering column 2 received from the Electronic Control Unit NB 6A is determined to be indicative of a state of absence of motion of the steering column 2 (for example is Non Active). In detail, if the SteeringMovement signal changes from Not Active to Active, the steering column 2 is in motion and the calibration in the DMS 6B is not started with respect to the coordinates received from the Electronic Control Unit NB 6A; if the SteeringMovement signal changes from Active to Not Active, the DMS 6B can start the calibration, since the position of the steering column 2 has stabilised.

Conveniently, the electronic processing resources 6 are further configured to display, by means of electronic display resources (for example a display or screen) of the motor vehicle, a representation indicative of the position of the optical sensor 4 according to the reference system S1 fixed to the motor vehicle.

In detail, said representation is configured to guide the driver of the motor vehicle to adjust the steering column 2 to a specific position (for example to the nominal position) . Optionally, said specific position for the steering column 2 to assume can be selected by the driver of the motor vehicle by means of the electronic display resources of the motor vehicle. In greater detail, said representation indicative of the position of the optical sensor 4 is textual or graphical content that indicates a direction in which (and, optionally, an amount by which) to move the steering column 2 so that it assumes the specific position. By way of example, said representation is an arrow, optionally of different size and/or colour as a function of the position of the optical sensor 4.

Preferably, in order to provide the output indicative of the driving behaviour of the driver of the motor vehicle, the electronic processing resources 6 are further configured to compute (block 8) a quantity indicative of the driver's gaze direction with respect to the reference system S1 fixed to the motor vehicle based on the captured images (and received as input) and based on the computed spatial transformation model. In particular, said quantity indicative of the driver's gaze direction is a gaze vector; in particular, a three-dimensional vector that originates from the driver's eyes (for example from their centre) and extends towards an area of interest where the driver is looking or specifically extends to the origin of the reference system S2 (as in figure 5).

In particular, the electronic processing resources 6 are configured to compute (block 8) a quantity indicative of the driver's gaze direction with respect to the reference system S2 of the camera based on the captured images received as input. According to an aspect of the present invention, the electronic processing resources 6 are configured to execute an eye tracking algorithm designed to compute (block 8) the quantity indicative of the driver's gaze direction based on an image of the area to be monitored received as input. By way of example, the eye tracking algorithm is the PCCR (Pupil Centre Corneal Reflection) algorithm. Said eye tracking algorithm is conveniently designed to compute data indicative of the position of the origin of the driver's gaze, in detail comprising said position of the origin of the gaze, based on the image of the area to be monitored received as input. Furthermore, the eye tracking algorithm is therefore designed to compute (block 8) the quantity indicative of the driver's gaze direction based on the position of the optical sensor 4 (in detail based on the position quantities of said optical sensor 4) and based on the data indicative of the position of the origin of the driver's gaze.

In detail, the eye tracking algorithm is designed to detect one or more eyes in the image of the area to be monitored; in greater detail, by executing an object detection model (for example a neural network) trained to recognise an eye in an image received as input. In greater detail, said eye tracking algorithm is designed to detect a face, and then to detect one or more eyes within the detected face. In particular, said eye tracking algorithm is further configured to geometrically determine the position of the iris of the eye within each detected eye. In detail, said eye tracking algorithm is designed to determine, or compute, the data indicative of the position of the origin of the driver's gaze based on the eyes detected in the image of the area to be monitored; in particular, based on the position of the iris of said eyes.

Furthermore, said electronic processing resources 6 are configured to compute (block 8) the quantity indicative of the driver's gaze direction with respect to the reference system S1 fixed to the motor vehicle based on the spatial transformation model and based on the quantity indicative of the driver's gaze direction with respect to the reference system S2 of the camera. Preferably, said electronic processing resources 6 are configured to compute (block 8) the quantity indicative of the driver's gaze direction with respect to the reference system S1 fixed to the motor vehicle by applying the spatial transformation model (in detail the roto-translation matrix) to the computed quantity indicative of the driver's gaze direction with respect to the reference system S2 of the camera. In detail, the electronic processing resources 6 are configured to compute (block 8) the quantity indicative of the driver's gaze direction with respect to the reference system S1 fixed to the motor vehicle by applying a roto-translation, defined by the spatial transformation model, to the quantity indicative of the driver's gaze direction with respect to the reference system S2 of the camera; in particular, by multiplying the computed quantity indicative of the driver's gaze direction with respect to the reference system S2 of the camera by the rotation matrix and adding (in order to translate the reference system S2 of the camera) the result to the position of the origin of the reference system S2 with respect to the reference system S1.

In fact, the electronic processing resources 6 can only measure the quantity indicative of the driver's gaze direction in camera coordinates, since the image of the area to be monitored is captured by the optical sensor 4 mounted to be coupled, in detail, with the steering column 2. To convert the quantity indicative of the driver's gaze direction to vehicle coordinates, the electronic processing resources 6 are designed to apply (block 8) a roto-translation to said quantity (i.e. to the gaze vector), i.e. to apply the spatial transformation model (i.e. the roto-translation matrix) to the same quantity. In greater detail, the application of the spatial transformation model comprises the multiplication of the rotation matrix of the spatial transformation model by the gaze vector and the sum (in detail to translate said gaze vector) of the result of the multiplication and the position, in detail the spatial coordinates of the origin of the reference system S2 of the optical sensor 4 with respect to the reference system S1 fixed to the motor vehicle.

Figure **5** shows an optical sensor for monitoring the driver's attention to driving and the reference system S2 fixed to said optical sensor 4 according to the present invention. In particular, said Figure 5 shows an example of a quantity indicative of the driver's gaze direction, i.e. the gaze vector, with respect to the reference system S1 fixed to the motor vehicle.

In detail, the electronic processing resources 6 are configured to compute the quantity indicative of the driver's gaze direction, i.e. the gaze vector, with respect to the reference system S1 fixed to the motor vehicle according to the following formula, representative of the spatial transformation model: ${\left\{{v}_{S}\left(t\right)\right\}}_{V} = {\left[R\right]}_{V}^{C} {\left\{{v}_{S}\left(t\right)\right\}}_{C}$

Wherein, {*v_{S}*(*t*)}*_{V}* is the quantity indicative of the driver's gaze direction with respect to the reference system S1 fixed to the motor vehicle, ${\left[R\right]}_{V}^{C}$ is the rotation matrix, {*v_{S}*(*t*)}*_{C}* is the quantity indicative of the gaze direction (in detail indicative of the gaze direction and its origin) of the driver with respect to the reference system S2 of the camera.

In detail, the electronic processing resources 6 are configured to provide the output (block 9) indicative of the driving behaviour of the driver of the motor vehicle based on said quantity indicative of the driver's gaze direction with respect to the reference system S1 fixed to the motor vehicle. According to a preferred aspect of the present invention, the electronic processing resources 6 are designed to generate the output (block 9) (preferably an alert indicative of a request to the driver to pay attention to driving) if the condition of driver inattention is determined to be satisfied. Wherein, in detail, the electronic processing resources 6 are designed to determine whether the condition of driver inattention is or is not satisfied based on the quantity indicative of the driver's gaze direction with respect to the reference system S1 fixed to the motor vehicle. In detail, the electronic processing resources 6 are designed to determine that the condition of driver inattention is satisfied if the zone, towards which the driver's gaze is directed, is determined to be a distraction zone. Wherein, by way of example, the electronic processing resources 6 are designed to determine whether a zone is or is not a distraction zone based on one or more predefined attention zones, or road zones. In detail, the electronic processing resources 6 are designed to determine that a zone is a distraction zone if it is determined that it is not an attention zone or a road zone. In detail, the electronic processing resources 6 are designed to determine, in detail to detect, a zone towards which the driver's gaze is directed based on the quantity indicative of the driver's gaze direction with respect to the reference system S1 fixed to the motor vehicle. In greater detail, the electronic processing resources 6 are designed to detect the zone towards which the driver's gaze is directed by executing or applying a calculation model on the quantity indicative of the driver's gaze direction with respect to the reference system S1 fixed to the motor vehicle. Wherein, in detail, said calculation model is configured, for example trained, to receive a gaze vector as input and to detect (or compute) a zone or area of an image to which said gaze vector points.

Based on the above description, the advantages that the present invention makes it possible to achieve are evident.

In particular, the present invention allows to carry out the driving behaviour monitoring of the driver, preventing possible estimation errors due to discrepancies between the nominal coordinates of the position of the optical sensor (in detail, of the camera) and the actual ones. In detail, the Applicant observes that, by monitoring the driving behaviour of the driver by means of the position data indicative of the position of the optical sensor (by means of which it is possible to compute the spatial transformation model), the present invention is able to prevent the estimation errors to which known automotive systems are subject. In greater detail, the Applicant notes that the present invention allows to compute (block 7) said spatial transformation model since it also allows to determine the position of the optical sensor 4, and therefore to monitor its displacement.

Furthermore, the Applicant observes that the present invention allows the driving behaviour of the driver of the motor vehicle to be monitored, avoiding estimation errors due to any displacements of the steering column 2, even in the case where the motor vehicle is a convertible. In particular, it can be noted that, on conventional cars, a DMS camera 6B can determine its own coordinates with respect to the vehicle (and compensate for any movements of the steering column 2, in addition to normal installation tolerances and displacements during the life of the car) by identifying its position with respect to suitably recognised fixed points of the passenger compartment. It can be noted that this operation, without the implementation of the present automotive system 1, is, however, more complex (and may lead to estimation errors) in the case of spider cars, where, with an open roof, the fixed references are very limited and the interior brightness decreases considerably due to the lack of diffusion of infrared radiation inside the passenger compartment by the roof. It can be noted that this operation, without the implementation of the present automotive system 1, is, however, more complex (and may lead to estimation errors) also in the case of cars with the roof coloured with one or several specific colours or materials; this variability is in fact a further risk factor that is difficult to control.

According to the preferred embodiment of the present invention, the Applicant further observes that the position sensors 5 have been selected (the Hall effect position sensor 5A and the inductive rotary sensor 5B) so as to possess specific technical characteristics. In particular, the position sensors 5 are capable of detecting the linear position on the z-axis with a full range of 60 mm and an accuracy of 1 mm, as well as detecting the linear position on the x-axis with a full range of 44 mm and an accuracy of 1 mm. Furthermore, said position sensors 5 ensure continuous measurement, and have an analogue interface for retrofitting on pre-existing electronic control units in motor vehicles. Furthermore, the selected position sensors 5 are immune to dust and possible oil or condensation residues. Furthermore, it can be observed that the position sensors 5 have been selected to have a low impact on the mechanical design for safety reasons of the steering column 2.

In detail, several other types of sensors have been analysed which, however, did not meet all the above-mentioned requirements, unlike the selected position sensors 5. For example, Softpot solutions with a contact wiper have the disadvantage that they are not immune to dust and other residues, do not guarantee the necessary accuracy, and wear out over time. Furthermore, encapsulated linear potentiometers can only be used after a complete redesign of the steering column 2 system. Instead, the linear displacement transducer (LVDT) presents a disadvantage both in terms of cost and due to the need to redesign the entire steering column 2 system. Another example is optical detection, which is an unusable solution in environments without protection from dust and condensation.

## Claims

1. Automotive system (1) for monitoring the driving behaviour of a driver of a motor vehicle; wherein, the automotive system (1) for monitoring the driving behaviour comprises:
- a steering column (2) comprising at least one member (2B) that is movable with respect to a reference system (S1) fixed to the motor vehicle;
- an automotive sensory platform (3) comprising:
- at least one optical sensor (4) mounted so as to move with the movable member (2B) of the steering column (2), and configured to capture one or more images of an area of the motor vehicle interior with respect to a reference system (S2) fixed to the optical sensor (4); and
- one or more position sensors (5) mounted and configured to generate position data indicative of the position of the optical sensor (4) with respect to the reference system (S1) fixed to the motor vehicle; and
- electronic processing resources (6) configured to:
- receive, from the automotive sensory platform (3), one or more captured images and position data indicative of the position of the optical sensor (4) with respect to the reference system (S1) fixed to the motor vehicle; and
- determine and provide an output (block 9) indicative of the driving behaviour of the driver of the motor vehicle based on said captured images and on the position data indicative of the position of the optical sensor (4) with respect to the reference system (S1) fixed to the motor vehicle.

2. Automotive system (1) for monitoring the driving behaviour according to claim 1, wherein the electronic processing resources are configured to:
- compute (block 7) a spatial transformation model, in particular a roto-translation matrix, based on the position data received as input; the spatial transformation model being configured to receive a quantity with respect to the reference system (S2) fixed to the optical sensor (4), and to compute and output a corresponding quantity with respect to the reference system (S1) fixed to the motor vehicle based on the quantity received as input; and
- determine and provide an output (block 9) indicative of the driving behaviour of the driver of the motor vehicle based on said captured images and on the spatial transformation model.

3. Automotive system (1) for monitoring the driving behaviour according to claim 2, wherein the electronic processing resources (6) are further configured to determine a pitch angle (*α*) of the optical sensor (4), and to compute (block 7) the spatial transformation model based on the computed pitch angle (*α*).

4. Automotive system (1) for driving behaviour monitoring according to claim 3, wherein the position sensors (5) comprise a Hall effect position sensor (5A) mounted and configured to generate data indicative of the orientation of the optical sensor (4) with respect to the reference system (S1) fixed to the motor vehicle; wherein, said data comprises a quantity indicative of the pitch angle (*α*) of the optical sensor (4).

5. Automotive system (1) for driving behaviour monitoring according to claim 3 or 4, wherein the position sensors (5) comprise a rotary sensor (5B), in particular an inductive one, mounted and configured to generate data indicative of a displacement of the movable member (2B) of the steering column (2) along an axis (A) of the steering column (2); and wherein, the electronic processing resources (6) are configured to:
- compute a position value of the optical sensor (4) along the vertical axis (z) of the reference system (S1) fixed to the motor vehicle and a position value of the optical sensor (4) along the longitudinal axis (x) of the reference system (S1) fixed to the motor vehicle based on the data indicative of the displacement of the movable member (2B) along the axis (A) of the steering column (2) and based on the pitch angle (*α*) of the optical sensor (4); and
- compute (block 7) the spatial transformation model based on the position value of the optical sensor (4) along the vertical axis (z) of the reference system (S1) fixed to the motor vehicle and based on the position value of the optical sensor (4) along the longitudinal axis (x) of the reference system (S1) fixed to the motor vehicle.

6. Automotive system (1) for driving behaviour monitoring according to any one of claims 2 to 5, wherein the electronic processing resources (6) are further configured to:
- determine whether a condition of absence of motion of the steering column (2) is or is not satisfied based on position data, indicative of the position of the optical sensor (4) with respect to the reference system (S1) fixed to the motor vehicle, generated at a current time instant and based on position data, indicative of the position of the optical sensor (4) with respect to the reference system (S1) fixed to the motor vehicle, generated at a time instant prior to the current time instant; and
- compute (block 7) the spatial transformation model if the condition of absence of motion of the steering column (2) is determined to be satisfied.

7. Automotive system (1) for driving behaviour monitoring according to any one of claims 2 to 6, wherein the electronic processing resources are configured to:
- compute (block 8) a quantity indicative of the driver's gaze direction with respect to the reference system (S2) fixed to the optical sensor (4) based on the captured images;
- compute a quantity indicative of the driver's gaze direction with respect to the reference system (S1) fixed to the motor vehicle based on the spatial transformation model and based on the quantity indicative of the driver's gaze direction with respect to the reference system (S2) fixed to the optical sensor (4); and
- provide an output (block 9) indicative of the driving behaviour of the driver of the motor vehicle based on said computed quantity indicative of the driver's gaze direction with respect to the reference system (S1) fixed to the motor vehicle.

8. Automotive system (1) for monitoring the driving behaviour according to claim 7, wherein the electronic processing resources (6) are further configured to:
- determine whether a condition of driver inattention is or is not satisfied based on the quantity indicative of the driver's gaze direction with respect to the reference system (S1) fixed to the motor vehicle; and
- generate an alert indicative of a request to the driver to pay attention to driving if the condition of driver inattention is determined to be satisfied.

9. Automotive system (1) for driving behaviour monitoring according to any one of the preceding claims, wherein the position data are indicative of a position of the optical sensor (4) along a vertical axis (z) of the reference system (S1) fixed to the motor vehicle and of a position of the optical sensor (4) along a longitudinal axis (x) of the vehicle-fixed reference system (S1).

10. Automotive system (1) for driving behaviour monitoring according to any one of the preceding claims, wherein the steering column (2) comprises a first member (2A) configured and arranged to rotate with respect to the reference system (S1) fixed to the motor vehicle and a second member (2B) configured and arranged to translate with respect to the first member (2A) of the steering column (2); the optical sensor (4) being mounted to the second member (2B) so as to move therewith.
